# EUROPEAN PATENT SPECIFICATION

(11) **EP 3 560 828 B1**
(45) Date of publication and mention of the grant of the patent: **21.12.2022**
(21) Application number: 19168427.3
(22) Date of filing: 10.04.2019
(51) Int. Cl.: B64C 27/08, B64C 27/20, B64C 29/00, B64C 39/00, B64C 39/12

(54) **VTOL FIXED-WING AERIAL DRONE WITH INTERCHANGEABLE CABINS**
SENKRECHT STARTENDE UND LANDENDE (VTOL) STARRFLÜGLERDROHNE MIT AUSTAUSCHBAREN KABINEN
DRONE AÉRIEN ADAV À VOILURE FIXE ET À CABINES INTERCHANGEABLES

(30) Priority: 10.04.2018 US 201815950123
(43) Date of publication of application: 30.10.2019
(73) Proprietor: Shanghai Autoflight Co., Ltd., Jinshan District Shanghai 201500 (CN)
(72) Inventor: TIAN, Yu, Shanghai 201500 (CN)
(74) Representative: MERH-IP Matias Erny Reichl Hoffmann Patentanwälte PartG mbB

(56) References cited:
- KR-B1- 100 602 708
- US-A1- 2016 207 625
- US-A1- 2017 210 470
- Marco Margaritoff: "Elroy Air's 'Aluminum Falcon' VTOL Drone Can Carry Up to 150 Pounds - The Drive", , 22 December 2017 (2017-12-22), XP055624700, Retrieved from the Internet: URL:https://www.thedrive.com/aerial/17176/ elroy-airs-aluminum-falcon-vtol-drone-can- carry-up-to-150-pounds [retrieved on 2019-09-20]
- Jason Torchinsky: "This Airbus Patent For Removable Passenger Pods Would Change How We Board Airplanes", , 12 March 2015 (2015-03-12), XP055624754, Retrieved from the Internet: URL:https://jalopnik.com/airbus-patents-re movable-passenger-pod-for-airplanes-174598 7614 [retrieved on 2019-09-20]
- Anonymous: "Airbus' new concept is a car, a drone, and a train all in one - The Verge", , 7 March 2017 (2017-03-07), XP055625021, Retrieved from the Internet: URL:https://www.theverge.com/2017/3/7/1484 1324/airbus-concept-car-drone-train-geneva -motor-show [retrieved on 2019-09-23]

## Description

### FIELD OF THE DISCLOSURE

The present disclosure relates to a vertical takeoff and landing (VTOL) aerial drone, and more particularly, a VTOL flying platform having interchangeable and detachable cabins.

### BACKGROUND OF THE DISCLOSURE

Generally, some aerial drones are known to carry people, and some aerial drones are known to carry cargo. Each of these two types of drones has its unique challenges to perform effectively and efficiently.

There is a continuing need for new ways to carry people and/or cargo effectively and efficiently.

Marco Margaritoff, "Elroy Air's 'Aluminum Falcon' VTOL Drone Can Carry Up to 150 Pounds - The Drive", (2017-12-22), URL: https://www.thedrive.com/aerial/17176/elroy-airs-aluminum-falcon-vtol-drone-can-carry-up-to-150-pounds, relates to a VTOL cargo drone. Jason Torchinsky, "This Airbus Patent For Removable Passenger Pods Would Change How We Board Airplanes", (2015-03-12), URL: https://jalopnik.com/airbus-patents-removable-passenger-pod-for-airplanes-1745987614, relates to removable passenger cabins.

US 2017/0210470 A1 relates to a cleaning drone and a corresponding docking station. US 2016/0207625 A1 relates to a VTOL aircraft with a wing structure designed to generate a lifting force for the aircraft during horizontal motion. Anonymous, "Airbus' new concept is a car, a drone, and a train all in one - The Verge", (2017-03-07), URL: https://www.theverge.com/2017/3/7/14841324/airbus-concept-car-drone-train-geneva-motor-show, relates to a monocoque (or "passenger capsule"), that can be used in multiple modes of transportation. KR 100 602 708 B1 relates to an ultralight landing device of a vertical take-off and landing flight device, and more particularly, to a landing device capable of stable landing while minimizing weight.

### BRIEF SUMMARY OF THE DISCLOSURE

The claimed invention discloses a VTOL (vertical off and landing) aerial drone according to appended claim 1. an aspect combinable with the general implementation, the flying platform can have an energy storage unit disposed within its main body. Alternatively and optionally, there can be an energy storage unit disposed within the passenger cabin and/or the cargo cabin to supply energy to the flying platform. In this way, whenever the flying platform picks up a new cabin, its energy source/storage is also replenished.

In another aspect combinable with the general implementation, the flying platform can have a hybrid engine to produce electricity.

In yet another aspect combinable with the general implementation, each of the two linear supports can have a total of four lifting propellers attached, wherein at least two lifting propellers are disposed at the same lengthwise location on the same linear support, but on opposite sides (i.e., top side and bottom side) of the linear support.
In another aspect combinable with the general implementation, the flying platform can have a left wing-tip propeller disposed on the distal end of the left main wing, and a right wing-tip propeller disposed on the distal end of the right main wing,

In still another aspect combinable with the general implementation, a center pushing propeller can be coupled to a rear end of the main body and be extended downward via a connector so that the pushing propeller is physically away from the main body and vertically offset from the main body.

In another aspect combinable with the general implementation, the flying platform can have autonomous flight functions to transport passengers and/or cargo.

In another aspect combinable with the general implementation, the passenger cabin can include user control interface allowing the passenger to control flight path, regardless of whether or not the aerial drone has autonomous flight capabilities.

In still another aspect combinable with the general implementation, the passenger cabin and/or cargo cabin can be attached to either on the top side of the flying platform, the bottom side of the flying platform, or both.

In another aspect combinable with the general implementation, the flying platform can have at least one single-blade leaf spring as a landing gear.

In a further aspect combinable with the general implementation, the flying platform can use at least one vertical stabilizer as a landing gear.

In yet another aspect combinable with the general implementation, the at least one vertical stabilizer can have a landing gear attached to its distal end.

Accordingly, the present disclosure is directed to an aerial drone that transports goods and people using detachable cabins.

Among the many possible implementations of an aerial drone, one embodiment of the aerial drone is one that has an overall flat configuration being attachable to separable passenger and/or cargo cabins. This overall flat configuration can be defined as a flying platform, a flying trellis, a flying framework, a flying scaffold, and a flying lattice work.

Further, it is contemplated that this flying platform has a canard design having two main wings and two canard wings.

Contemplated main wings can each have a wing-tip lifting propellers disposed on the distal tip of each main wing. Optionally, the wing-tip lifting propellers can be located on a vertical stabilizer or a vertical lifter which is located at the distal end of each main wing. In this way, the wing-tip lifting propeller could be somewhat position vertically away from the top surface of the main wing.

In one embodiment, within each linear support there can be a foldable leg. During flight, the foldable leg is retracted into the linear support. During vertical takeoff and landing, the foldable leg is extended to act as a landing gear, or to support a landing gear.

Another aspect of the embodiments is directed to an aerial droneusing single-blade leaf spring as a landing gear. There may be more than one such single-blade leaf spring to act as landing gears. In yet another embodiment, such single-blade leaf spring can be attached to the distal end of a downward-extending vertical stabilizer, effectively using the downward-extending vertical stabilizer as a support for the landing gear.

While this specification contains many specific implementation details, these should not be construed as limitations on the scope of any inventions or of what may be claimed, but rather as descriptions of features specific to particular implementations of particular embodiments. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above and below as acting in certain combinations and even initially described as such, one or more features from a described/claimed combination can in some cases be excised from the combination, and the described/claimed combination may be directed to a subcombination or variation of a subcombination.

A number of implementations have been described. Nevertheless, it will be understood that various modifications may be made without departing from the scope of the disclosure. For example, example operations, methods, or processes described herein may include more steps or fewer steps than those described. Further, the steps in such example operations, methods, or processes may be performed in different successions than that described or illustrated in the figures.

The details of one or more implementations of the subject matter described in this disclosure are set forth in the accompanying drawings and the description below. Other features, aspects, and advantages of the subject matter will become apparent from the description, the drawings, and the claims.

### BRIEF DESCRIPTION OF THE DRAWINGS

It should be noted that the drawing figures may be in simplified form and might not be to precise scale. In reference to the disclosure herein, for purposes of convenience and clarity only, directional terms such as top, bottom, left, right, up, down, over, above, below, beneath, rear, front, distal, and proximal are used with respect to the accompanying drawings. Such directional terms should not be construed to limit the scope of the embodiment in any manner.
Fig. 1 is a top perspective view of an embodiment of a VTOL drone system having a flying platform and a cargo cabin detachably attached, according to an example not forming part of the claimed invention.
Fig. 2 is a top rear perspective view of the drone system of Fig.1, according to an example not forming part of the claimed invention.
Fig. 3 is a side view of the drone system of Fig. 1, according to an example not forming part of the claimed invention.

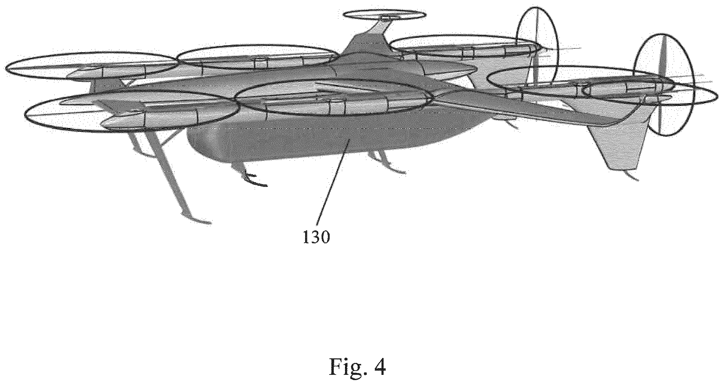

Fig. 4 is a top perspective view of another embodiment of a VTOL drone system having a flying platform and a cabin detachably attached, according to an example not forming part of the claimed invention.
Fig. 5 is a top view of the drone system of Fig. 4, according to an example not forming part of the claimed invention.
Fig. 6 is a front view of the drone system of Fig. 4, according to an example not forming part of the claimed invention.
Fig. 7 is a top perspective view of an embodiment of a VTOL drone system having a flying platform and a passenger cabin detachably attached, according to an example not forming part of the claimed invention.

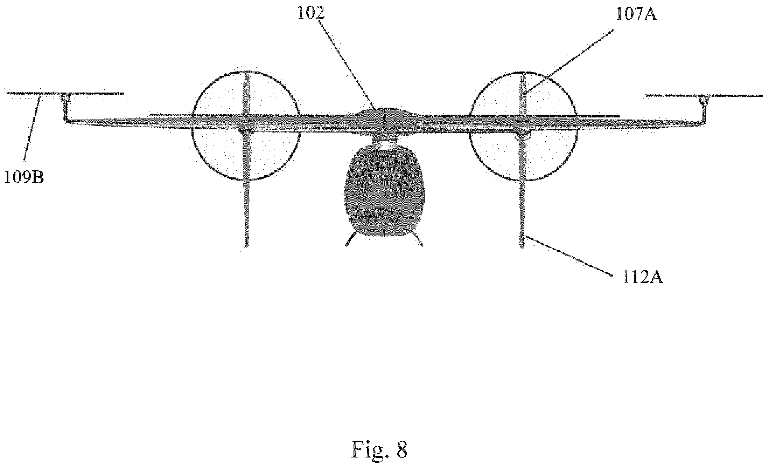

Fig. 8 is a front view of the drone system of Fig. 7, according to an example not forming part of the claimed invention.

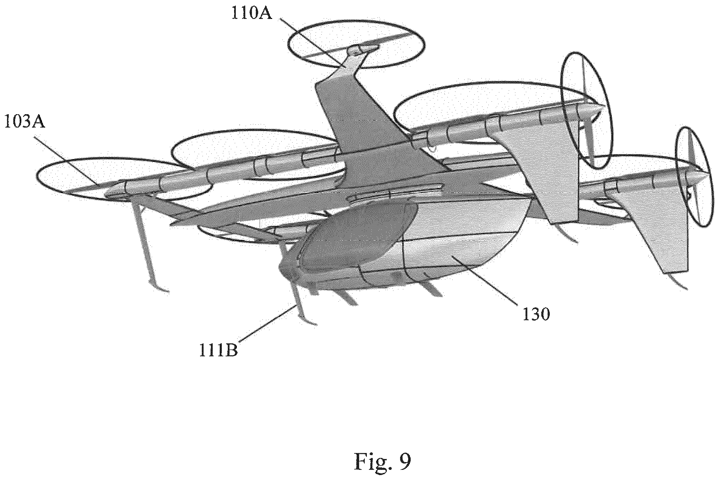

Fig. 9 is a rear perspective view of the drone system of Fig. 7, according to an example not forming part of the claimed invention.
Fig. 10 is a rear perspective view of the drone system of Fig. 7 with the passenger cabin detached, according to an example not forming part of the claimed invention.
Fig. 11 is a rear perspective view of the embodiment of Fig. 7, according to an example not forming part of the claimed invention.
Fig. 12 is a rear perspective view of another embodiment, according to an example not forming part of the claimed invention.
Fig. 13 is a side bottom perspective view of still yet another embodiment of the drone system, according to the claimed invention.

The following call out list of elements in the drawing can be a useful guide when referencing the elements of the drawing figures:
- 100: Flying transport system
- 101: Flying platform
- 102: Main body
- 103A: Left linear support
- 103B: Right linear support
- 104A: Left main wing
- 104B: Right main wing
- 105A: Left canard wing
- 105B: Right canard wing
- 106A: Left vertical stabilizer
- 106B: Right vertical stabilizer
- 107A: Left pushing propeller
- 107B: Right pushing propeller
- 108A: First lifting propeller
- 108B: Second lifting propeller
- 108C: Third lifting propeller
- 108D: Fourth lifting propeller
- 108E: Fifth lifting propeller
- 108F: Sixth lifting propeller
- 109A: Left wing-tip propeller
- 109B: Right wing-tip propeller
- 110A: Left wing-tip vertical stabilizer
- 110B: Right wing-tip vertical stabilizer
- 111A: Left folding leg
- 111B: Right folding leg
- 112A: First leaf spring blade
- 112B: Second leaf spring blade
- 112C: Third leaf spring blade
- 112D: Fourth leaf spring blade
- 116: Vertical extender
- 117: Center push propeller
- 130: Cargo cabin
- 135A: First cabin leaf spring blade
- 135B: Second cabin leaf spring blade
- 135C: Third cabin leaf spring blade
- 135D: Fourth cabin leaf spring blade
- 140: Passenger cabin
- 145A: Cabin leg
- 145B: Cabin leg
- 145C: Cabin leg
- 145D: Cabin leg
- 147: Cabin attachment catch
- 150: Energy storage unit in the flying platform
- 155: Energy storage unit in the cabin

### DETAILED DESCRIPTION OF THE EMBODIMENTS

The different aspects of the various embodiments can now be better understood by turning to the following detailed description of the embodiments, which are presented as illustrated examples of the embodiments defined in the claims. It is expressly understood that the embodiments as defined by the claims may be broader than the illustrated embodiments described below.

The words used in this specification to describe the various embodiments are to be understood not only in the sense of their commonly defined meanings, but to include by special definition in this specification structure, material or acts beyond the scope of the commonly defined meanings. Thus if an element can be understood in the context of this specification as including more than one meaning, then its use in a claim must be understood as being generic to all possible meanings supported by the specification and by the word itself.

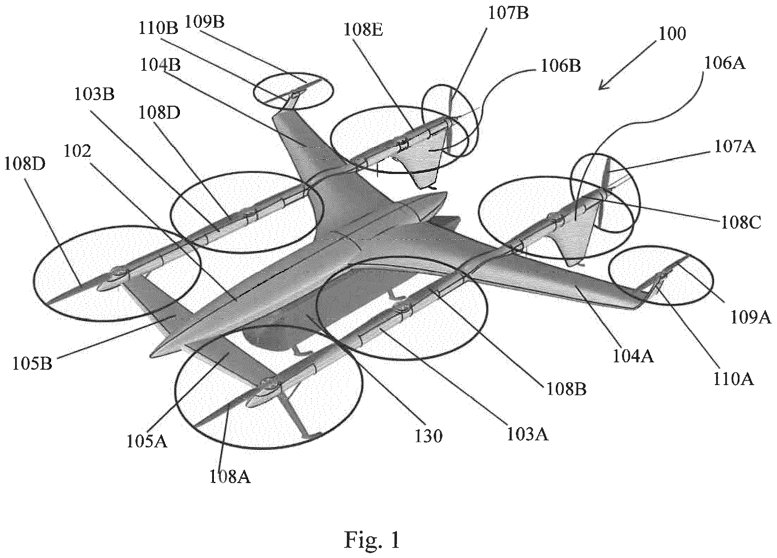

Fig. 1 generally depicts an embodiment of VTOL aerial drone 100 having a canard configuration, according to an example not forming part of the claimed invention. The drone 100 has two main wings 104A, 104B, and two canard wings 105A, 105B. The two main wings 104A, 104B and the two canard wings 105A, 105B can be attached to a main body 102, wherein the main body can be located alone a center longitudinal line of the drone 100. There is a left linear support 103A optionally disposed parallel to the main body 102, which connects the left main wing 104A to the left canard wing 105A. Similarly, there is a right linear support 103B optionally disposed parallel to the main body 102, which connects the right main wing 104B to the right canard wing 105B.

The left and right linear supports 103A, 103B are contemplated to improve the structural integrity of the drone 100. In other embodiments, the left and right linear supports 103A and 103B can house driving motors (not shown) that drive each of the lifting propellers 108A, 108B, 108C, 108D, 108E, 108F. As will to disclosed later, the left and right linear supports 103A and 103B can also house folding legs 111 each of which is retrievable within the left and right linear supports 103A and 103B.

In one embodiment, the left and right linear supports 103A, 103B are attached to the distal ends of left and right canard wings 105A, 105B, respectively. In yet another embodiment, the left and right linear supports 103A, 103B extend beyond the canard wings 105A, 105B.

In one embodiment, the left and right linear supports 103A, 103B are attached to near the mid-section of left and right main wings 104A, 104B, respectively. In yet another embodiment, the left and right linear supports 103A, 103B extend in a rearward direction beyond the main wings 104A, 104B.

The left linear support 103A is contemplated to be relatively narrow in diameter and has a plurality of lifting propellers 108A, 108B, 108C disposed on either the top side, bottom side, or both, of the left linear support 103A. These lifting propellers 108A, 108B, 108C can be driven by low profile motors disposed within the hollow interior of the left linear support 103A. In the embodiment shown in Fig. 1, lifting propellers 108A, 108B, 108C are disposed only the top side of the left linear support 103A.

Likewise, the right linear support 103B is contemplated to be relatively narrow in diameter and has a plurality of lifting propellers 108D, 108E, 108F disposed on either the top side, bottom side, or both, of the right linear support 103B. These lifting propellers 108D, 108E, 108F can be driven by low profile motors disposed within the hollow interior of the right linear support. In the embodiment shown in Fig. 1, lifting propellers 108D, 108E, 108F are disposed only the top side of the right linear support 103B.

The drone 100 according to the claimed invention has at least two pushing propellers to push the drone 100 in a forward direction According to the claimed invention, there are two pushing propellers 107A, 107B. According to an example not forming part of the claimed invention the two pushing propellers 107A, 107B can be disposed, respectively, on the rear distal ends of linear supports 103A, 103B.

Near the rear ends of each linear support 103A, 103B are provided two vertical stabilizers 106A, 106B, respectively. While they are shown pointing downwards, there can also be an embodiment where they point upwards.

In another embodiment, each of the main wings 104A, 104B can have an additional lifting propeller 109A, 109B, respectively, disposed at its distal end. This can be achieved by providing wing-tip vertical stabilizers 110A, 110B at the distal ends of the main wings 104A, 104B, respectively, and have the lifting propellers 109A, 109B disposed at the upper tip of each wing-tip vertical stabilizers 110A, 110B. These wing-tip lifting propellers 109A, 109B can be relatively smaller than the lifting propellers disposed on the linear supports 103A, 103B.

These wing-tip lifting propellers 109A, 109B can be used to effectively and efficiently control the roll of the drone 100. Being located at a most distal position away from the center axis of the drone 100, these wing-tip lifting propellers 109A, 109B are effective in adjusting the roll of drone 100, and can do so with a diameter smaller than that of other lifting propellers.

As shown further in Fig. 1, there is a cabin 130 generally attached under the main body 102 of the drone 100.

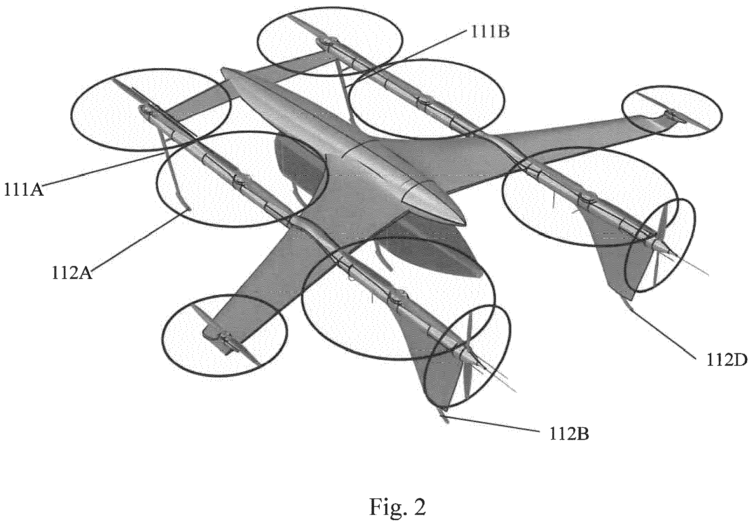

Referring now to the details of FIG. 2, which depicts an example not forming part of the claimed invention, the drone 100 is contemplated to use any type of landing gear. In one embodiment, the drone 100 can have four single-blade leaf springs 112A, 112B, 112C, 112D as its landing gear. The front two single-blade leaf springs 112A, 112C are respectively disposed on the distal ends of folding legs 111A, 111B. Folding legs 111A, 111B can be respectively retracted into the interior space of the left and right linear supports 103A, 103B during flight.

The rear two single-blade left springs 112B, 112D are contemplated to be disposed at the bottom distal ends of vertical stabilizers 106A, 106B, respectively.

The contemplated single-blade leaf springs 112A, 112B, 112C, 112D can be made of suitable materials to provide sufficient resiliency and integrity, such materials include natural and synthetic polymers, various metals and metal alloys, naturally occurring materials, textile fibers, and all reasonable combinations thereof. In one embodiment, cargon fiber is used.

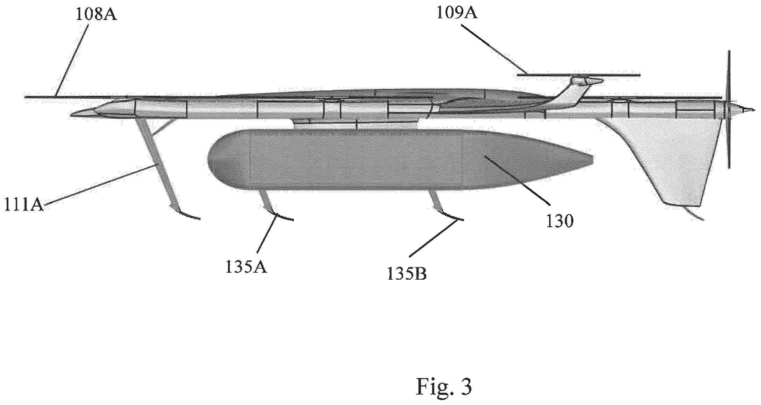

Turning now to Fig. 3, which depicts an example not forming part of the claimed invention, the cabin is a cargo cabin 130. The cargo cabin 130 can have single-blade leaf springs 135A, 135B, 135C, 135D as its landing gear. Alternatively it can have other types of landing gear such as skids, leg stands, and wheels.

In the contemplated embodiments, the cargo cabin 130 is detachable from the rest of the drone 100. The remaining portion of the drone can be called a flying platform 101. The flying platform 101 can fly without carrying a cabin, and it can interchangeably carry different cabins. As will be described later, the flying platform 101 can also carry passenger cabins.

In the examples shown, all of the cabins 130, 140 are carried underneath the flying platform 101. Cabins 130, 140 are contemplated to be loaded on the ground, and the loading process can be done prior to or after the flying platform 101 is attached to the cabin 130, 140.

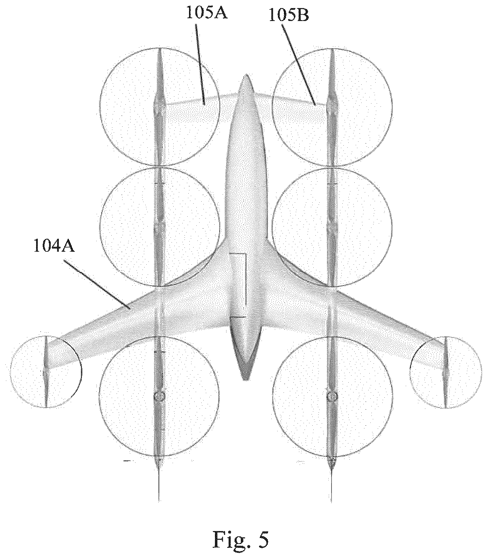

Fig. 5 shows a top view of the flying platform 101 according to an example not forming part of the claimed invention. It can have a generally flat configuration, capable of carrying a load underneath it, or above it. During high speed flying, all six lifting propellers 108A, 108B, 108C, 108D, 108E, 108F can be locked into position so each blade is parallel to the main body 102.

Figure 5 shows one embodiment of the flying platform 101 according to an example not forming part of the claimed invention, where the canard wings 105A, 105B each have a length no longer than half the length of each of the main wings 104A, 104B.

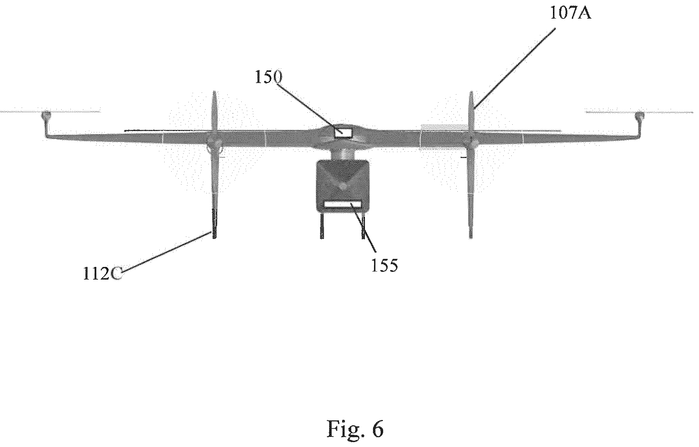

Fig. 6 generally depicts the frontal view of the flying platform 101 with a detachably attached cargo cabin 130, according to an example not forming part of the claimed invention. Whether it is a cargo cabin 130, passenger cabin 140, or any other types of load, it is especially contemplated that there can be an energy storage unit 150 disposed within the main body 102 of the flying platform. The energy stored can be used to power other components of the flying platform, such as the lifting propellers 108A, 108B, 108C, 108D and pushing propellers 107A, 107B. The energy stored can be electricity, and the storage unit is a battery. In another embodiment, this energy storage 150 can be used to power accessories within the cabin 130, 140.

These batteries 150 can also be disposed in other parts of the flying platform 101, such as within the linear supports 103A, 103B.

Alternatively or optionally, there can be an energy storage unit 155 disposed within the cabin 130, 140. The energy stored in storage unit 155 can be used to power the lifting propellers 108A, 108B, 108C, 108D and pushing propellers 107A, 107B. The energy stored can be electricity, and the storage unit is a battery. By having an energy storage unit 155 in the cabin 130, 140, the flying platform 101 would have replenished energy sources every time the flying platform 101 picks up a new cabin 130, 140. The flying platform 101 itself may be emergency energy storage, or a smaller capacity battery 150 necessary to power the flying platform 101 for shorter amount of time while it flies without a cabin 130, 140. In one embodiment, the main source of electricity for the flying platform 101 comes from battery 150 located in the cabin 130, 140. In this way, when the flying platform 101 swaps an old cabin 130, 140 out for a new cabin 130, 140, the flying platform 101 or the entire VTOL drone system 100 would have a fully charged energy source. This is a beneficial method that eliminates the need for a VTOL drone to charge itself. In a preferred embodiment, the flying platform 101 can work/fly continuously, picking up cargo cabin/passengers cabin, drop off cargo cabin/passengers cabin, for many hours, even days, without the need to stop for charging its battery.

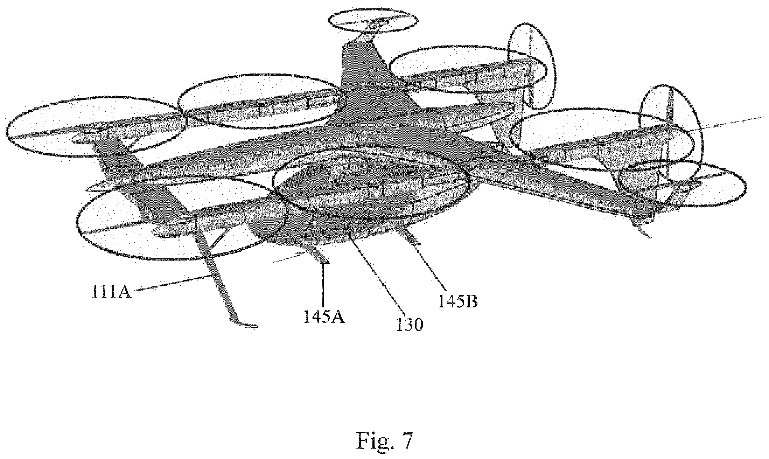

Referring now to the details of Fig.7, which depicts an example not forming part of claimed invention, a passenger cabin 150 is provided. This passenger cabin 150 can use any type of landing gear, such as stiff legs 145A, 145B, 145C, 145D as shown.

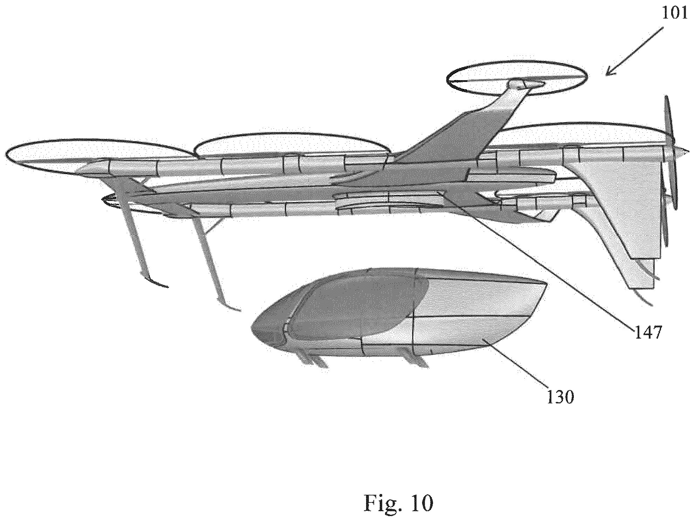

Fig. 10 generally depicts one aspect of the disclosure where the cabin (whether cargo cabin or passenger cabin) is detachable, according to an example not forming part of the claimed invention. Here, passenger cabin 140 can be selectively detached from the flying platform 101. The engagement and disengagement between the flying platform 101 and the cabin 140 can be performed autonomously (without simultaneous user intervention) by a computer and/or other sensors and computing devices. Alternatively or optionally, the user can actively control and direct the engagement and disengagement between the flying platform 101 and the cabin 140.

As those of ordinary skill in the art will recognize, various different types of engaging mechanism 147 can be used to secure the cabin 140 to the flying platform 101. For example, the engaging mechanism can be mechanical catches, magnetic catches, tracks and grooves, or a combination of any known engagement means.

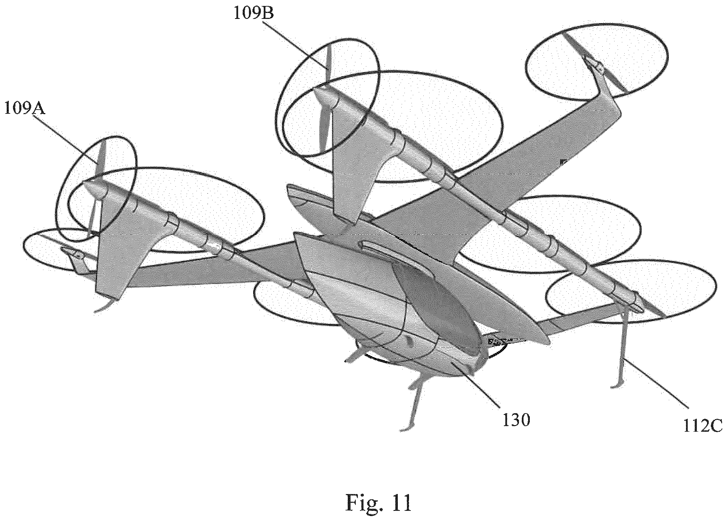

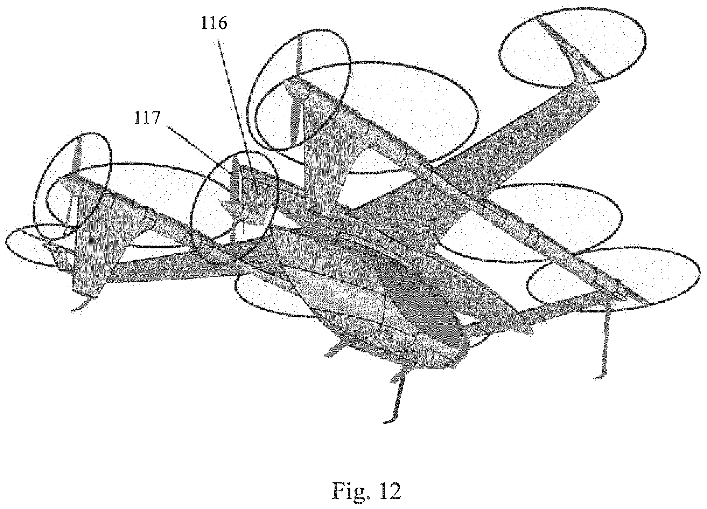

It is important to appreciate that besides having the two pushing propellers 107A and 107B (as shown in Fig 11 according to an example not forming part of the claimed invention), optionally, there can be a center pushing propeller 117 coupled to the rear end of the main body 102 (as shown in Fig. 12 according to an example not forming part of the claimed invention). As illustrated in Fig. 12, a center pushing propeller 117 is connected to the rear end of the main body 102 via a vertical extender 116. The vertical extender 116 can be any structure of any shape to physically couple to pushing propeller 117 such that the center of rotation for the pushing propeller 117 is vertically offset from the main body 102. In yet another embodiment, the pushing propeller 117 is vertically offset from the main body 102 such that the center of rotation for the pushing propeller 117 is vertically located at a position to the rear of the cabin 140, or vertically level with the cabin 140. In yet another embodiment, the pushing propeller 117 is vertically level with the top portion of the cabin 140. In still yet another embodiment, the pushing propeller 117 is vertically level with the middle portion of the cabin 140. In a further embodiment, the pushing propeller 117 is vertically level with the bottom portion of the cabin 140.

Not shown in any of the figures is an example not forming part of the claimed invention where there are no pushing propellers 107A, 107B at the end of the linear supports 103A, 103B, respectively. Instead, there can only be one pushing propeller 117 coupled to the rear end of the main body 102.

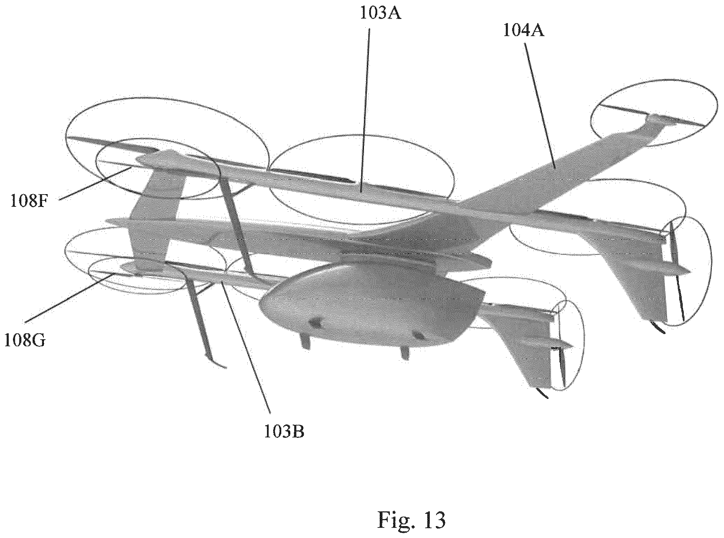

It is also contemplated that each linear support 103A, 103B can contain more than three lifting propellers by providing a longer linear support to contain more lifting propellers, by using smaller diameter lifting propellers, or by placing lifting propellers on both the top side and the bottom side of the linear support. Fig. 13 shows one embodiment according to the claimed invention where two additional lifting propellers 108G, 108H are provided at the bottom front ends of linear support 103A, 103B.

While according to examples not forming part of the claimed invention the pushing propellers 107A, 107B have been shown in previous figures to locate at the rear distal ends of the linear supports 103A, 103B, it is specifically contemplated that these pushing propellers 107A, 107B can be disposed at a horizontal level that is lower than the main wings 104A, 104B such as those shown in Fig. 13 which depicts an embodiment according to the claimed invention. According to the claimed invention, these pushing propellers 107A, 107B are disposed at a horizontal level substantially equal to the horizontal level of the cabin 130, 140 being carried by the flying platform 101. According to the claimed invention, these pushing propellers 107A, 107B are disposed about mid-way down the vertical stabilizers 106A, 106B. One contemplated reason to lower the disposition of the pushing propellers 107A, 107B is to minimize a head-dipping effect during flight, which can be caused by aerodynamic effects caused by the cabin 130, 140.

Many alterations and modifications may be made by those having ordinary skill in the art without departing from the scope of the disclosed embodiments. Therefore, it must be understood that the illustrated embodiments have been set forth only for the purposes of example and that it should not be taken as limiting the embodiments as defined by the following claims. to be restricted except in the scope of the disclosure of the appended claims. Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Insubstantial changes from the claimed subject matter as viewed by a person with ordinary skill in the art, now known or later devised, are expressly contemplated as being equivalent within the scope of the claims.

## Claims

1. A VTOL (vertical take-off and landing) aerial drone having interchangeable cabins, the aerial drone (100) comprising:
a flying platform (101) having:
a left main wing (104A) and a right main wing (104B);
a left canard wing (105A) and a right canard wing (105B);
a main body (102) disposed between the left main wing (104A) and the right main wing (104B);
a left linear support (103A) connecting the left main wing (104A) to the left canard wing (105A);
a right linear support (103B) connecting the right main wing (104B) to the right canard wing (105B);
the left linear support (103A) having. first, a second, a third lifting propeller (108A, 108B, 108C), and a left vertical stabilizer (106A);
the right linear support (103B) having a fourth, a fifth, a sixth lifting propeller (108D, 108E, 108F) and a right vertical stabilizer (106B);
at least one pushing propeller (107A; 107B);
**characterized in that** the flying platform (101) comprises a cargo cabin (130) and a passenger cabin (140) being interchangeably and detachably coupled to the flying platform (101), **in that** the at least one pushing propeller (107A; 107B) is disposed so as to be horizontally level with the cargo cabin (130) or the passenger cabin (140), and **in that** the at least one pushing propeller includes a left pushing propeller (107A) disposed in a mid-section of the left vertical stabilizer (106A), and a right pushing propeller (107B) disposed in a mid-section of the right vertical stabilizer (106B).

2. The aerial drone as recited in claim 1 further comprising an energy storage unit (155) disposed in the cargo cabin (130) and/or the passenger cabin (140) to supply energy to the flying platform (101).

3. The aerial drone as recited in claim 1 further comprising a hybrid engine to produce electricity.

4. The aerial drone as recited in claim 1, wherein the left linear support (103A) has a seventh lifting propeller (108G) disposed on an underside of the left linear support (103A), and the right liner support (103B) has an eighth lifting propeller (108H) disposed on an underside of the right linear support (103B).

5. The aerial drone as recited in claim 1 the further comprising a left wing-tip propeller (109A) disposed on a distal end of the left main wing (104A), and a right wing-tip propeller (109B) disposed on a distal end of the right main wing (104B).

6. The aerial drone as recited in claim 1, wherein a center pushing propeller (117) is coupled to a rear end of the main body (102) and is extended downward away from the main body (102).

7. The aerial drone as recited in claim 1 further comprising autonomous flight functions and the passenger cabin (140) including a user control interface to manually control flight functions.

8. The aerial drone as recited in claim 1, wherein the passenger cabin (140) and the cargo cabin (130) can be detachably attached to a bottom of the flying platform (101).

9. The aerial drone as recited in claim 1 further comprising at least one single-blade leaf spring (112A, 112B, 112C, 112D) as a landing gear.

10. The aerial drone as recited in claim 1 wherein at least one landing gear is disposed at a distal end of the left and right vertical stabilizers (106A, 106B).

11. The aerial drone as recited in claim 1 wherein at least one landing gear is disposed at a distal end of a folding leg (111A), which is retrievable within the left linear support (103A).

## Patentansprüche

1. VTOL-Flugdrohne (Flugdrohne zum vertikalen Abheben und Landen), die austauschbare Kabinen aufweist, wobei die Flugdrohne (100) Folgendes umfasst:
eine fliegende Plattform (101), die Folgendes aufweist:
einen linken Hauptflügel (104A) und einen rechten Hauptflügel (104B);
einen linken Entenflügel (105A) und einen rechten Entenflügel (105B);
einen Hauptkörper (102), der zwischen dem linken Hauptflügel (104A) und dem rechten Hauptflügel (104B) angeordnet ist;
eine linke geradlinige Stütze (103A), die den linken Hauptflügel (104A) mit dem linken Entenflügel (105A) verbindet;
eine rechte geradlinige Stütze (103B), die den rechten Hauptflügel (104B) mit dem rechten Entenflügel (105B) verbindet; wobei
die linke geradlinige Stütze (103A) einen ersten, einen zweiten und einen dritten Hubpropeller (108A, 108B, 108C) und ein linkes Seitenleitwerk (106A) aufweist; und
die rechte geradlinige Stütze (103B) einen vierten, einen fünften und einen sechsten Hubpropeller (108D, 108E, 108F) und ein rechtes Seitenleitwerk (106B) aufweist; und
mindestens einen Schubpropeller (107A; 107B);
**dadurch gekennzeichnet, dass**
die fliegende Plattform (101) eine Frachtkabine (130) und eine Passagierkabine (140), die an die fliegende Plattform (101) austauschbar und lösbar gekoppelt sind, umfasst,
der mindestens eine Schubpropeller (107A; 107B) derart angeordnet ist, dass er mit der Frachtkabine (130) oder der Passagierkabine (140) horizontal nivelliert ist, und
der mindestens eine Schubpropeller einen linken Schubpropeller (107A), der in einem Mittelabschnitt des linken Seitenleitwerks (106A) angeordnet ist, und einen rechten Schubpropeller (107B), der in einem Mittelabschnitt des rechten Seitenleitwerks (106B) angeordnet ist, enthält.

2. Flugdrohne nach Anspruch 1, die ferner eine Energiespeichereinheit (155), die in der Frachtkabine (130) und/oder der Passagierkabine (140) angeordnet ist, um Energie zu der fliegenden Plattform (101) zu liefern, umfasst.

3. Flugdrohne nach Anspruch 1, die ferner eine Hybridkraftmaschine umfasst, um Elektrizität zu erzeugen.

4. Flugdrohne nach Anspruch 1, wobei die linke geradlinige Stütze (103A) einen siebten Hubpropeller (108G) aufweist, der auf einer Unterseite der linken geradlinigen Stütze (103A) angeordnet ist, und die rechte geradlinige Stütze (103B) einen achten Hubpropeller (108H) aufweist, der auf einer Unterseite der rechten geradlinigen Stütze (103B) angeordnet ist.

5. Flugdrohne nach Anspruch 1, die ferner einen linken Flügelspitzenpropeller (109A), der bei einem abgelegenen Ende des linken Hauptflügels (104A) angeordnet ist, und einen rechten Flügelspitzenpropeller (109B), der bei einem abgelegenen Ende des rechten Hauptflügels (104B) angeordnet ist, umfasst.

6. Flugdrohne nach Anspruch 1, wobei ein zentraler Schubpropeller (117) an ein hinteres Ende des Hauptkörpers (102) gekoppelt ist und sich vom Hauptkörper (102) nach unten weg erstreckt.

7. Flugdrohne nach Anspruch 1, die ferner Funktionen zum automatischen Fliegen umfasst, wobei die Passagierkabine (140) eine Anwendersteuerschnittstelle enthält, um Flugfunktionen manuell zu steuern.

8. Flugdrohne nach Anspruch 1, wobei die Passagierkabine (140) und die Frachtkabine (130) auf einer Unterseite der fliegenden Plattform (101) lösbar angebracht sein können.

9. Flugdrohne nach Anspruch 1, die ferner mindestens eine Einzelblatt-Blattfeder (112A, 112B, 112C, 112D) als ein Landegestell umfasst.

10. Flugdrohne nach Anspruch 1, wobei mindestens ein Landegestell bei einem abgelegenen Ende des linken und des rechten Seitenleitwerks (106A, 106B) angeordnet ist.

11. Flugdrohne nach Anspruch 1, wobei mindestens ein Landegestell bei einem abgelegenen Ende eines Klappbeins (111A), das in die linke geradlinige Stütze (103A) rückholbar ist, angeordnet ist.

## Revendications

1. Drone aérien du type ADAV (avion à décollage et atterrissage vertical) ayant des cabines interchangeables, le drone aérien (100) comprenant :
une plate-forme de vol (101) ayant :
une voilure principale de gauche (104A) et une voilure principale de droite (104B) ;
une voilure « canard » de gauche (105A) et une voilure « canard » de droite (105B) ;
un corps principal (102) disposé entre la voilure principale de gauche (104A) et la voilure principale de droite (104B) ;
un support linéaire de gauche (103A) raccordant la voilure principale de gauche (104A) à la voilure « canard » de gauche (105A) ;
un support linéaire de droite (103B) raccordant la voilure principale de droite (104B) à la voilure « canard » de droite (105B) ;
le support linéaire de gauche (103A) ayant un premier, un deuxième et un troisième propulseur de levage (108A, 108B, 108C), et un stabilisateur vertical de gauche (106A) ;
le support linéaire de droite (103B) ayant un quatrième, un cinquième et un sixième propulseur de levage (108D, 108E, 108F) et un stabilisateur vertical de droite (106B) ;
au moins un propulseur de poussée (107A ; 107B) ;
**caractérisé en ce que** la plate-forme de vol (101) comprend une cabine de chargement (130) et une cabine de passager (140) qui sont couplées de manière interchangeable et détachable à la plate-forme de vol (101),
**en ce que** ledit au moins un propulseur de poussée (107A; 107B) est disposé de manière à être horizontalement de niveau avec la cabine de chargement (130) ou la cabine de passager (140), et
**en ce que** ledit au moins un propulseur de poussée inclut un propulseur de poussée de gauche (107A), disposé dans une section médiane du stabilisateur vertical de gauche (106A), et un propulseur de poussée de droite (107B) disposé dans une section médiane du stabilisateur vertical de droite (106B).

2. Drone aérien selon la revendication 1, comprenant en outre une unité de stockage d'énergie (155) disposée dans la cabine de chargement (130) et/ou dans la cabine de passager (140) pour alimenter la plate-forme de vol (101) en énergie.

3. Drone aérien selon la revendication 1, comprenant en outre un moteur hybride pour produire de l'électricité.

4. Drone aérien selon la revendication 1, dans lequel le support linéaire de gauche (103A) a un septième propulseur de levage (108G) disposé sur une face inférieure du support linéaire de gauche (103A), et le support linéaire de droite (103B) a un huitième propulseur de levage (108H) disposé sur une face inférieure du support linéaire de droite (103B).

5. Drone aérien selon la revendication 1, comprenant en outre un propulseur de bout de voilure de gauche (109A) disposé sur une extrémité distale de la voilure principale de gauche (104A), et un propulseur de bout de voilure de droite (109B) disposé sur une extrémité distale de la voilure principale de droite (104B).

6. Drone aérien selon la revendication 1, dans lequel un propulseur de poussée central (117) est couplé à une extrémité arrière du corps principal (102) et s'étend vers le bas en éloignement du corps principal (102).

7. Drone aérien selon la revendication 1, comprenant en outre des fonctions de vol autonome et la cabine de passager (140) incluant une interface de commande d'utilisateur pour une commande manuelle des fonctions de vol.

8. Drone aérien selon la revendication 1, dans lequel la cabine de passager (140) et la cabine de chargement (130) peuvent être fixées de manière détachable sur un fond de la plate-forme de vol (101).

9. Drone aérien selon la revendication 1, comprenant en outre au moins un un ressort monolame (112A, 112B, 112C, 112D) à titre de train d'atterrissage.

10. Drone aérien selon la revendication 1, dans lequel au moins un train d'atterrissage est disposé à une extrémité distale des stabilisateurs verticaux de gauche et de droite (106A, 106B).

11. Drone aérien selon la revendication 1, dans lequel au moins un train d'atterrissage est disposé à une extrémité distale d'une jambe pliable (111A), qui peut être ramenée à l'intérieur du support linéaire de gauche (103A).
